# EUROPÄISCHE PATENTSCHRIFT

(11) **EP 1 326 763 B1**
(45) Veröffentlichungstag und Bekanntmachung des Hinweises auf die Patenterteilung: **17.10.2007**
(21) Anmeldenummer: 01971472.4
(22) Anmeldetag: 15.10.2001
(51) Int. Cl.: B60N 2/34, B61D 1/06, B62D 31/04

(54) **KOJENANORDNUNG, INSBESONDERE FÜR VERKEHRSMITTEL**
BERTH SYSTEM, ESPECIALLY FOR MEANS OF TRANSPORTATION
SYSTEME DE COUCHETTES, NOTAMMENT POUR MOYENS DE TRANSPORT

(30) Priorität: 19.10.2000 AT 17942000
(43) Veröffentlichungstag der Anmeldung: 16.07.2003
(73) Patentinhaber: FRELLER, Walter, A-5310 Mondsee (AT)
(72) Erfinder: FRELLER, Walter, A-5310 Mondsee (AT)
(74) Vertreter: Hübscher, Helmut
(86) Internationale Anmeldenummer: PCT/AT2001/000330
(87) Internationale Veröffentlichungsnummer: WO 2002/032718

(56) Entgegenhaltungen:
- DE-A- 3 901 140
- FR-A- 943 852
- US-A- 2 563 917
- US-A- 2 977 898
- US-A- 4 582 354
- US-A- 4 589 612
- US-A- 4 745 643

## Beschreibung

### Technisches Gebiet

Die Erfindung bezieht sich auf eine Kojenanordnung, insbesondere für Verkehrsmittel, mit mehreren hinter- und übereinandergereihten, reihenweise gegeneinander versetzten, wenigstens einen Liegesitz aufnehmenden Einzelkojen, die einen Sitzraum und einen vom Sitzraum ausgehenden Fußraum bilden, dessen Höhe kleiner als die Sitzraumhöhe ist.

### Stand der Technik

Um Passagieren unter Berücksichtigung der in Verkehrsmitteln im allgemeinen gedrängten Platzverhältnisse Liegemöglichkeiten zu bieten, ist es bekannt (US 4 745 643 A), beispielsweise aus Kunststoff gefertigte Kojen hinter- und übereinanderzureihen. Diese quaderförmigen, je eine Liege aufnehmenden Kojen weisen eine auf einen liegenden Passagier abgestimmte Höhe auf, so daß die Einzelkojen lediglich als Schlafkojen eingesetzt werden und sich nicht für den Aufenthalt von Passagieren außerhalb der Schlafenszeit eignen. Zur Vermeidung dieses Nachteils wurde bereits vorgeschlagen (DE 36 11 671 A1), ein Liegekojen bildendes Gestell so auszubilden, daß nach einem Umbau Sitzgelegenheiten für die Passagiere geschaffen werden, und zwar bei einer ausreichenden Raumhöhe. Dies wird dadurch erreicht, daß durch ein abwechselndes Aufstellen eines Teiles der Kojenböden die Kojen in der Längsmitte unterteilt werden, wobei sich aufgrund des auf beiden Seiten abwechselnd geöffneten Bodens Kojenabschnitte der halben Länge, aber der doppelten Höhe ergeben, wodurch in diesen Abschnitten Platz für eine aufrechte Sitzhaltung geschaffen wird. Nachteilig bei einer solchen Konstruktion ist einerseits die Notwendigkeit der Umrüstung, wofür die Passagiere die Kojen verlassen müssen, und anderseits der Umstand, daß nach der Umrüstung nur mehr die halbe Kojenlänge zur Verfügung steht.

Schließlich ist es bekannt (US 4 582 354 A), Kojen mit einem Sitzraum und einem vom Sitzraum ausgehenden Fußraum vorzusehen, dessen Höhe der halben Sitzraumhöhe entspricht. Diese Einzelkojenausbildung macht eine gegeneinander versetzte Anordnung der Einzelkojen übereinander möglich, wobei die übereinander zu liegen kommenden Fußräume sich paarweise zu einer Sitzraumhöhe ergänzen. Die dadurch erreichbare Verschachtelung der Einzelkojen erlaubt zwar eine gute Raumausnützung, bedingt aber eine gegensinnige Ausrichtung der mit den Fußräumen übereinanderliegenden Einzelkojen, was bei einer Kojenanordnung in Fahrrichtung dazu führt, daß die Hälfte der so verschachtelten Einzelkojen entgegen der Fahrrichtung ausgerichtete Liegesitze aufweist. Dazu kommt noch, daß die Sitzraumhöhe nicht unabhängig von der Fußraumhöhe gewählt werden kann.
Die Kojenanordnung aus der US 4 582 354 A entspricht dem Oberbegriff des Anspruchs 1.

### Darstellung der Erfindung

Der Erfindung liegt somit die Aufgabe zugrunde, eine Kojenanordnung der eingangs geschilderten Art mit einfachen konstruktiven Mitteln so auszugestalten, daß eine einheitliche Ausrichtung aller Einzelkojen unter einer vorteilhaften Raumausnützung möglich wird und die Sitzraumhöhe unabhängig von der Fußraumhöhe gewählt werden kann, um für die Benützer vorteilhafte Liege- wie auch Sitzbedingungen vorgeben zu können.

Die Erfindung löst die gestellte Aufgabe dadurch, daß jeweils die Dekken und Böden der Sitzräume den Negativformen der Böden und Decken des Fußraumes entsprechen.

Da zufolge dieser Maßnahmen die Fuß- und Sitzräume der übereinander angeordneten Einzelkojen abwechselnd aufeinander zu liegen kommen, bestimmen die abwechselnd übereinander angeordneten Sitz- und Fußräume die Gesamthöhe der Kojenanordnung, wobei die Sitzraumhöhe und die Fußraumhöhe voneinander unabhängig festgelegt werden können. Damit werden vorteilhafte Voraussetzungen geschaffen, um im Sitzraum der Einzelkojen ausreichend Platz zum aufrechten Sitzen zu bieten, was erst einen angenehmen Aufenthalt in den Einzelkojen über die Schlafenszeit hinaus ermöglicht. Trotz der vergleichsweise großen Sitzraumhöhe kann die Gesamthöhe der Kojenanordnung vergleichsweise klein gehalten werden, weil die Fußraumhöhe entsprechend niedrig ausfallen kann. Wegen der möglichen großen Sitzraumhöhe lassen sich die Einzelkojen nicht nur in vielfältiger Weise entsprechend den Bedürfnissen der Kojenbenützer ausstatten, sondern können auch dem liegenden Benützer wegen des dann großen Freiraumes bis zur Decke des Sitzraumes ein von Benützern benachbarter Kojen kaum beeinträchtigbares Wohlbefinden vermitteln.

Die gegenseitige Anpassung des Boden- und Deckenverlaufes im Bereich der Sitz- und Fußräume stellt einerseits eine gute Platzausnützung für die Kojenanordnung sicher und bringt anderseits eine Aussteifung der Kojenanordnung mit sich, was im Hinblick auf die bei Verkehrsmitteln übliche Gewichtsbeschränkung von wesentlicher Bedeutung ist. Der unmittelbare Anschluß der übereinanderliegenden Einzelkojen aneinander im Boden- und Deckenbereich ist allerdings nicht zwingend erforderlich. So kann beispielsweise durch eine unterschiedliche Boden- und Deckenform der der Höhe nach aneinander angrenzenden Einzelkojen Vorsorge für zusätzlichen Stauraum zwischen den Einzelkojen geschaffen werden.

Die Ausformung des Fußraumes kann im Hinblick auf verschiedene Liegehaltungen unterschiedlich ausfallen. Besonders vorteilhafte Verhältnisse ergeben sich in diesem Zusammenhang, wenn der Fußraum der Einzelkojen mit Abstand oberhalb des Bodens und unterhalb der Decke des Sitzraumes der Einzelkojen, vorzugsweise im Bereich des mittleren Drittels der Sitzraumhöhe, vorgesehen wird, weil in diesem Fall durch den Fußraum eine vorteilhafte Hochlagerung der Beine beim Liegen erzwungen wird.

Der Zugang zu den Einzelkojen muß aufgrund ihrer Reihung hinter- und übereinander von der Seite her erfolgen. Zu diesem Zweck können die Einzelkojen zumindest auf einer Längsseite im Bereich des Sitzraumes Einstiegsöffnungen aufweisen. Einzelkojen für einen einzigen Benützer benötigen lediglich Einstiegsöffnungen auf einer Längsseite. Werden breitere Einzelkojen für zwei Benützer vorgesehen, so empfehlen sich Einstiegsöffnungen auf beiden Längsseiten, um ein voneinander unabhängiges Ein- und Aussteigen der Benützer zu erleichtern.

Der Zugang zu den Einstiegsöffnungen kann über verschiedene Steighilfen, beispielsweise Leitern, erleichtert werden. Eine besonders vorteilhafte Konstruktion ergibt sich in diesem Zusammenhang, wenn die Einzelkojen im Bereich ihrer Fußräume gegen das Fußende hin schmäler ausgebildet werden, so daß die Decken der Sitzräume im Bereich des schmäleren Endes der darüberliegenden Einzelkojen eine Auftrittsfläche ergeben, die wie Trittstufen verwendet werden können. Durch entsprechende Haltegriffe an den Seitenwänden der Einzelkojen kann die Benützung der Steighilfen erleichtert werden.

### Kurze Beschreibung der Zeichnungen

In der Zeichnung ist der Erfindungsgegenstand beispielsweise dargestellt. Es zeigen
- Fig. 1: eine erfindungsgemäße Kojenanordnung in einer schematischen Seitenansicht und
- Fig. 2: diese Kojenanordnung ausschnittsweise in einem horizontalen Längsschnitt.

### Bester Weg zur Ausführung der Erfindung

Die dargestellte Kojenanordnung ist aus Einzelkojen 1 aufgebaut, die je einen Sitzraum 2 und einen davon ausgehenden Fußraum 3 bilden, und zwar gemäß dem Ausführungsbeispiel für zwei Personen. Die Anordnung ist dabei so getroffen, daß der Fußraum 3 oberhalb des Bodens 4 und unterhalb der Decke 5 des Sitzraumes 2 im Bereich des mittleren Drittels der Sitzraumhöhe an den Sitzraum 2 angeschlossen ist. Durch diese Fußraumanordnung wird für die Kojenbenutzer eine vorteilhafte Liegeposition erreicht, wie dies in einer Einzelkoje 1 strichpunktiert angedeutet ist. Aus der Liegeposition kann eine Sitzhaltung eingenommen werden, für die die eingebauten Liegesitze 6 entsprechend zu verstellen sind, beispielsweise dadurch, daß ein Teil des Liegesitzes 6 als Rückenlehne hochgeschwenkt wird, wie dies ebenfalls strichpunktiert für einen sitzenden Benutzer eingezeichnet wurde. In dieser Sitzhaltung kann eine Tischfläche 7 ausgeschwenkt oder zusätzliche Einrichtungen benützt werden. Verschiedene Einrichtungen der Einzelkojen 1 können sowohl im Liegen als auch im Sitzen vorteilhaft genutzt werden, wie dies für einen Bildschirm 8 angedeutet ist.

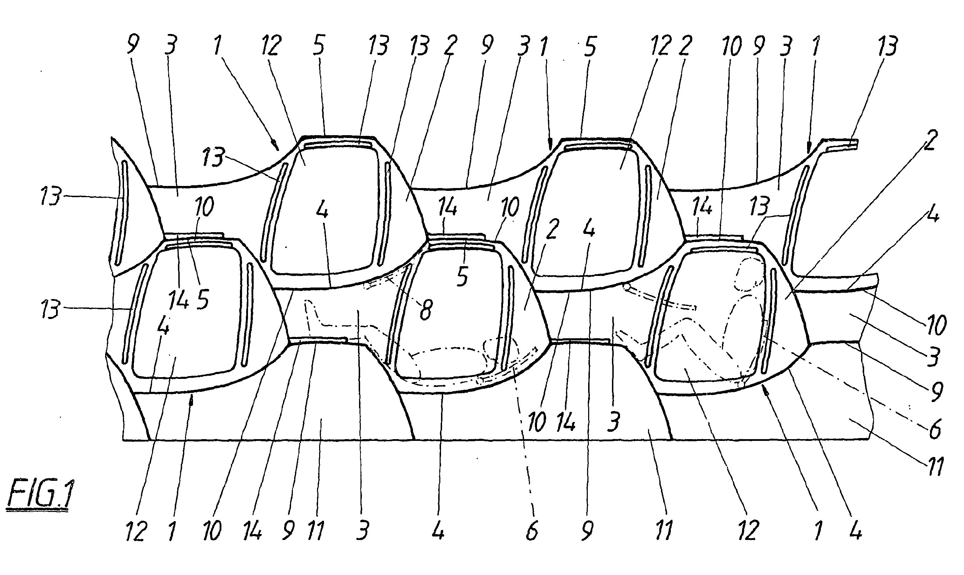

Wie sich der Fig. 1 entnehmen läßt, entsprechen die Böden 4 und die Decken 5 der Sitzräume 2 jeweils den Negativformen der Decken 9 und der Böden 10 der Fußräume 3, so daß die Einzelkojen 1 gegeneinander reihenweise versetzt lückenlos aneinandergereiht werden können. Die Einzelkojen 1 können dabei je für sich eine Baueinheit bilden oder gemeinsame Zwischenwände aufweisen, die einerseits die Decke 9 eines Fußraumes 3 und anderseits den Boden 4 des Sitzraumes 2 bzw. die Decke 5 des Sitzraumes 2 und den Boden 10 des Fußraumes 3 von übereinanderliegender Einzelkojen 1 ergeben. Der unterhalb der untersten Kojenreihe verbleibende Raum kann - entsprechend unterteilt - vorteilhaft als Stauraum 11 genützt werden.

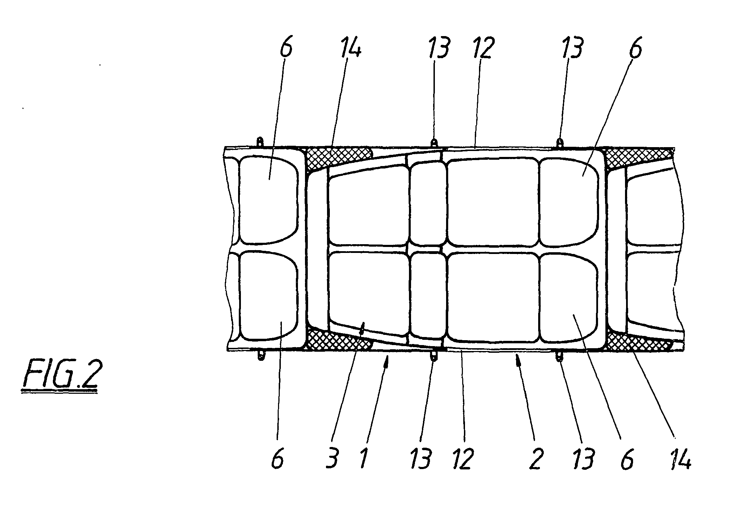

Der Zutritt zu den Einzelkojen 1 erfolgt über Einstiegsöffnungen 12, die mit Haltegriffen 13 versehen sind. Wie sich aus der Fig. 2 ergibt, sind zu beiden Seiten der Einzelkojen 1 Einstiegsöffnungen 12 vorgesehen, um ein gegenseitig unbehindertes Ein- und Aussteigen zweier Benützer einer gemeinsamen Einzelkoje 1 zu ermöglichen. Für Einzelkojen zur Aufnahme lediglich eines Benützer kann eine der beiden Einstiegsöffnungen 12 entfallen. Als Steighilfe zum Einsteigen der oberen Einzelkojen 1 können Leitern eingesetzt werden. Werden die Fußräume 3 gegen das Fußende hin schmäler ausgebildet, wie dies der Fig. 2 entnommen werden kann, so ergeben sich aufgrund der gegenüber den Decken 5 der jeweils unteren Einzelkojen 1 bzw. der Stauräume 11 zurückspringenden Fußräume 3 der aufgesetzten Einzelkojen 1 Flächenbereiche, die vorteilhaft als Auftrittsflächen 14 benutzt werden können.

Durch die erfindungsgemäße Kojenanordnung wird eine platzsparende, vergleichsweise leichte Konstruktion erhalten, die vorteilhaft in Verkehrsmitteln zur Aufnahme von Passagieren in Einzelkojen 1 eingesetzt werden kann. Die Größe und Ausgestaltung der Einzelkojen 1 können an die jeweiligen Raumverhältnisse angepaßt werden. Die Einsatzmöglichkeiten sind jedoch nicht auf Verkehrsmittel beschränkt, weil sich eine solche Kojenanordnung überall dort anbietet, wo eine Mehrzahl von Personen auf gedrängtem Raum in einer Weise untergebracht werden sollen, die eine gegenseitige Störung der Benutzer der Kojenanordnung weitgehend ausschließt.

## Patentansprüche

1. Kojenanordnung, insbesondere für Verkehrsmittel, mit mehreren hinter- und übereinandergereihten, reihenweise gegeneinander versetzten, wenigstens einen Liegesitz aufnehmenden Einzelkojen, die einen Sitzraum und einen vom Sitzraum ausgehenden Fußraum bilden, dessen Höhe kleiner als die Sitzraumhöhe ist, **dadurch gekennzeichnet, daß** jeweils die Decken (5) und Böden (4) der Sitzräume (2) den Negativformen der Böden (10) und Decken (9) des Fußraumes (3) entsprechen.

2. Kojenanordnung nach Anspruch 1, **dadurch gekennzeichnet, daß** der Fußraum (3) der Einzelkojen (1) mit Abstand oberhalb des Bodens (4) und unterhalb der Decke (5) des Sitzraumes (2) der Einzelkojen (1), vorzugsweise im Bereich des mittleren Drittels der Sitzraumhöhe, vorgesehen ist.

3. Kojenanordnung nach Anspruch 1 oder 2, **dadurch gekennzeichnet, daß** die Einzelkojen (1) zumindest auf einer Längsseite im Bereich des Sitzraumes (2) Einstiegsöffnungen (12) aufweisen.

4. Kojenanordnung nach einem der Ansprüche 1 bis 3, **dadurch gekennzeichnet, daß** die Einzelkojen (1) im Bereich ihrer Fußräume (3) gegen das Fußende hin schmäler ausgebildet sind und daß die Decken (5) der Sitzräume (2) im Bereich des schmäleren Endes der darüberliegenden Einzelkojen (1) eine Auftrittsfläche (14) bilden.

## Claims

1. Berth system, especially for means of transportation, with a plurality of individual berths arranged in rows one behind the other and one on top of the other, with the rows being partially offset relative to each other, and receiving at least one couchette, which berths form a sitting area and a foot space extending from the sitting area, the height of the foot space being smaller than the sitting area height, **characterised in that** the ceilings (5) and floors (4) of each of the sitting areas (2) correspond to the negative form of the floors (10) and ceilings (9) of the foot space (3).

2. Berth system according to claim 1, **characterised in that** the foot space (3) of the individual berths (1) is provided at a distance above the floor (4) and below the ceiling (5) of the sitting area (2) of the individual berths (1), preferably in the region of the middle third of the sitting area height.

3. Berth system according to claim 1 or 2, **characterised in that** the individual berths (1) comprise access openings (12) at least on one longitudinal side in the region of the sitting area (2).

4. Berth system according to one of the claims 1 to 3, **characterised in that** the individual berths (1) are formed in the region of their foot spaces (3) so as to be narrower towards the foot end and **in that** the ceilings (5) of the sitting areas (2) form a support surface (14) in the region of the narrower end of the individual berths (1) lying above.

## Revendications

1. Système de couchettes, en particulier pour moyens de circulation, avec plusieurs couchettes individuelles, alignées en rangée les unes derrière les autres et les unes au-dessus des autres, décalées rangée par rangée les unes par rapport aux autres, recevant au moins un siège couchette, formant un espace d'assise et un espace de pied partant de l'espace d'assise, dont la hauteur est inférieure à la hauteur de l'espace d'assise, **caractérisé en ce que** chaque fois les plafonds (5) et les fonds (4) des espaces d'assise (2) correspondent aux formes en négatif des fonds (10) et des plafonds (9) de l'espace de pied (3).

2. Système de couchettes selon la revendication 1, **caractérisé en ce que** l'espace de pied (3) des couchettes individuelles (1) est prévu à distance au-dessus du fond (4) et au-dessous du plafond (5) de l'espace d'assise (2) des couchettes individuelles (1), de préférence, dans la zone du tiers central de la hauteur d'espace d'assise.

3. Système de couchettes selon la revendication 1 ou 2, **caractérisé en ce que** les couchettes individuelles (1) présentent, sur au moins un côté longitudinal, dans la zone de l'espace d'assise (2), des ouvertures d'accès (12) .

4. Système de couchettes selon l'une des revendications 1 à 3, **caractérisé en ce que** les couchettes individuelles (1), dans la zone de leurs espaces de pied (3) vers l'extrémité de pied, sont plus étroites, et **en ce que** les plafonds (5) des espaces d'assise (2), dans la zone de l'extrémité plus étroite des couchettes individuelles (1) situées au-dessus, forment une surface de marche ou de pose de pied (14).
